# EUROPEAN PATENT SPECIFICATION

(11) **EP 1 382 897 B1**
(45) Date of publication and mention of the grant of the patent: **25.04.2007**
(21) Application number: 03253172.5
(22) Date of filing: 21.05.2003
(51) Int. Cl.: F16M 11/12

(54) **A monitor support**
Bildschirmtragevorrichtung
Support d'écran

(30) Priority: 16.07.2002 KR 2002041617
(43) Date of publication of application: 21.01.2004
(73) Proprietor: SAMSUNG ELECTRONICS CO., LTD., Suwon-si, Gyeonggi-do 442-742 (KR)
(72) Inventor: Jeong, Jun-soo, Suwon City, Kyungki-do (KR); Jung, Hyun-jun, Paldal-ku, Suwon City, Kyungki-do (KR)
(74) Representative: Grey, Ian Michael

(56) References cited:
- EP-A- 0 351 817
- EP-A- 1 085 753
- DE-U- 20 016 358
- US-A1- 2003 075 649
- US-B1- 6 189 842
- US-B1- 6 505 988

## Description

The present invention relates to a monitor support comprising a support arm, a support bracket connected to one end of the support arm and a support plate for attachment to a monitor, the support bracket and support plate including coupling means to mount a monitor to the support arm, the coupling means being operable to enable rotation of the support plate relative to the support bracket.

A conventional monitor support includes a base member 201 to stand the support on a horizontal plane such as a desk, and a link member 210 having one end attached to the base member 201. A monitor 202 may be attached to the free end of the link member 210. The support maintains the monitor 202 in an appropriate position for viewing by a user.

The link member 210 is attached to the base member 201 by a pair of base brackets 204,206 fastened to the base member 201 which enable the link member 210 to pivot relative to the base member 201. Therefore, the link member 210 may be rotated relative to the base member 201 in each direction, but the monitor main body 202 cannot rotate relative to the link member 210. Therefore, the height of the monitor may be controlled but not its angle of tilt.

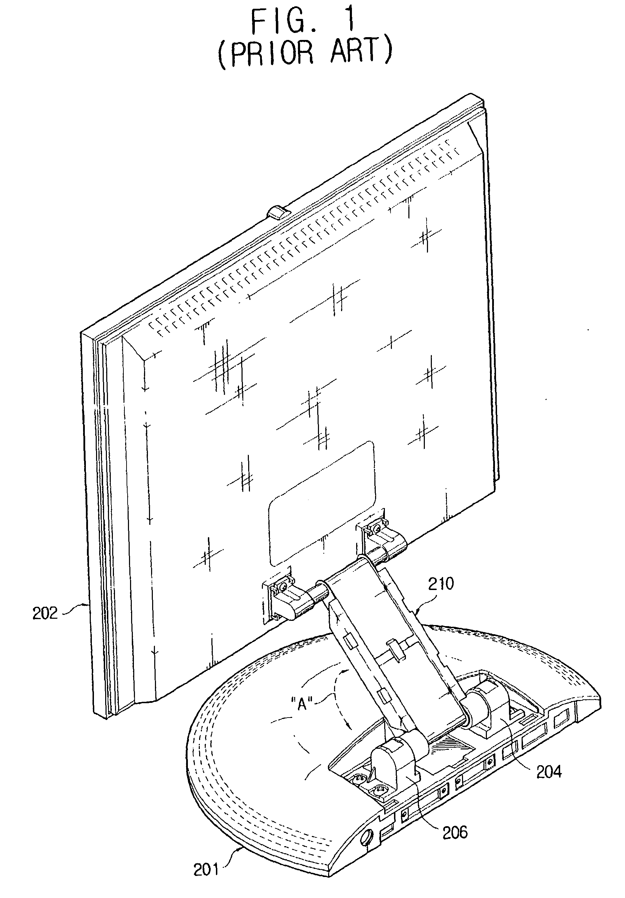

Contrary to the monitor support shown in Figure 1, there is a monitor in which the link member has a lower end incorporated with the base member, and an upper end rotatably combined to the monitor main body. Thus, the angle of tilt may be controlled but not its height.

Other known monitor supports are disclosed in DE 20016358 and US 6189842.

As computer usage continues to increase, improved devices for supporting a monitor are required which enable the user to position the monitor more precisely for comfortable viewing. There has been proposed a monitor which includes a monitor main body pivoted on a link member and an arm stand which is manufactured separately from the monitor and employed to support the monitor. The means of connection of such separately manufactured components is regulated by VESA (Video Electronic Standard Association).

A monitor support according to the present invention is characterised in that the other end of the support arm is pivotally connected to a base

In a preferred embodiment, the support bracket is pivotally mounted to said end of the support arm for rotation about an axis substantially at right angles to the axis of rotation of the support plate relative to the support bracket.

Preferably, the coupling means includes a hub member extending between the support plate and the support bracket, the support plate and/or the support bracket being rotatably mounted on the hub member.

In a preferred embodiment at least one washer is disposed on the hub between the support bracket and the support plate.

Advantageously, the hub member has a radially protruding rim at each end.

In one embodiment, at least one washer is disposed on the hub member between a rim and the support bracket and/or support plate so that the support plate and support bracket are held together with a predetermined frictional force which must be overcome to rotate the support plate relative to the support bracket.

Preferably, the rim at one end of the hub member is formed after insertion of the hub through an aperture in the support plate and support bracket by splaying said end of the hub member.

Preferably, the hub member has a hole extending through the centre thereof to allow a cable to pass therethrough to be connected to a monitor attached to the support plate.

The monitor support preferably includes means to restrict the angle of rotation of the support plate relative to the support bracket. Advantageously, said means comprises an arcuate guide slot in either the support plate or bracket coaxial with said apertures and a corresponding projection in either the support bracket or plate, respectively, the guide slot and projection cooperating to limit the angle through which the support plate can rotate relative to the support bracket.

The monitor support of the present invention also preferably includes a base, the other end of the support arm being pivotally mounted to the base for rotation of the support arm about a first axis relative to the base, the support bracket being pivotally connected to said end of the support arm for rotation about a second axis parallel to the first axis

In a preferred embodiment, a swinging linkage mechanism extends between the base and the support bracket and is operable to cause the support bracket to rotate relative to the support arm as the support arm rotates relative to the base.

Preferably, the swinging linkage mechanism comprises a pair of spaced parallel bars, each bar having a first end pivotally attached to the base member so that the first ends are equidistantly spaced from the first axis and a second end pivotally attached to the support bracket so that the second ends are equidistantly spaced from the second axis.

A hinge mechanism preferably connects the support bracket and support arm for rotation of the support bracket about the second axis, the hinge mechanism being operable to selectively enable the support bracket to rotate relative to the support arm about the second axis independently of rotation of the support arm about the first axis.

The monitor support according to the invention may include a monitor mounted on the support plate.

Embodiments of the invention will now be described, by way of example only, and with reference to Figures 2 to 11 of the accompanying drawings, in which:
Figure 1 is a rear perspective view of a conventional monitor support with the monitor attached thereto;
Figure 2 is a rear perspective view of the monitor support and monitor according to an embodiment of the present invention;
Figure 3 is a partially exploded perspective view of the monitor and support of Figure 2;
Figure 4 is an exploded perspective view of a pivot part of Figure 3;
Figure 5 is an exploded perspective view of a main hinge and a base hinge of Figure 3;
Figures 6A and 6B illustrate a planar rotation of a monitor on the monitor support of figure 2;
Figure 7 is a sectional view illustrating a tilting operation of a monitor on the monitor support of Figure 2;
Figures 8A and 8B are sectional views illustrating a rotating operation of a link member in the monitor support of Figure 2;
Figure 9 is a sectional view illustrating a completely folded state of the monitor support and monitor of Figure 2;
Figure 10 is a perspective view illustrating a base bracket to be mounted on a base member of the monitor support of Figure 2; and
Figure 11 is a sectional view illustrating a monitor mounted to an arm stand according to another embodiment.

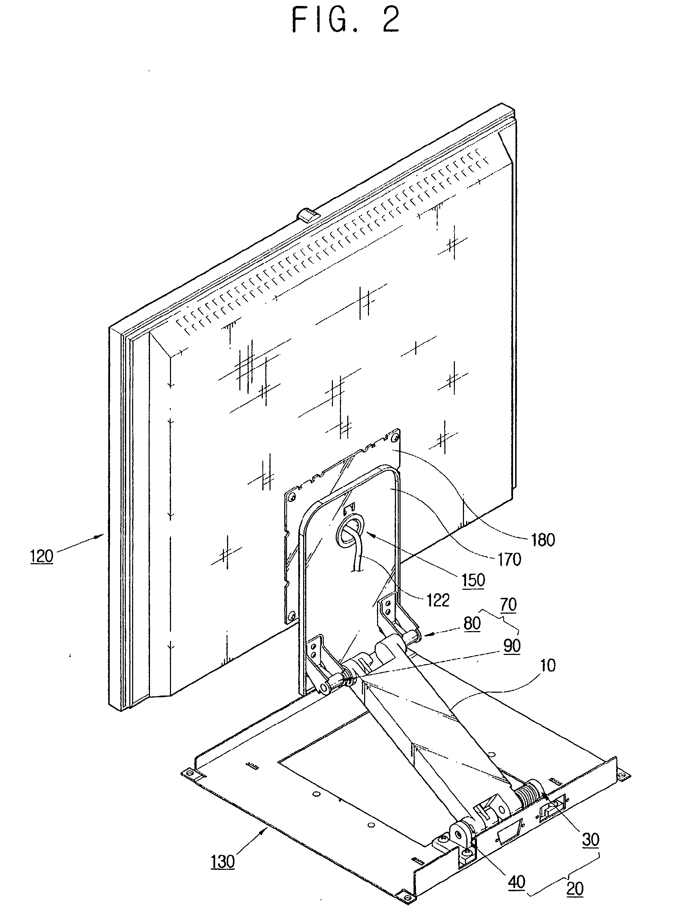

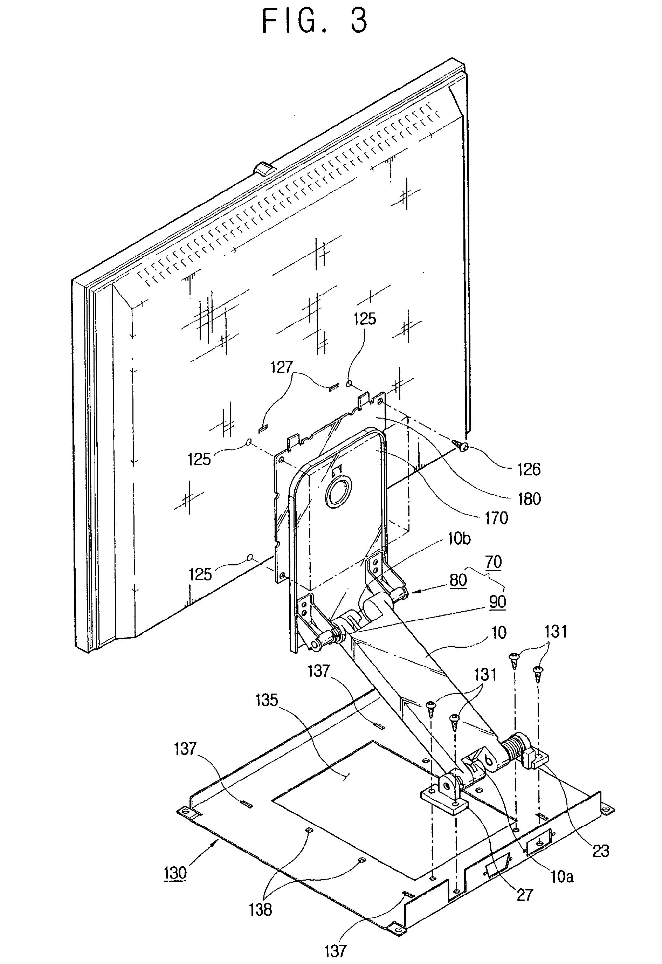

As shown in Figures 2 and 3, a monitor support to which a monitor 120 is attached comprises a base member 130 which may be stood on an installation plane such as a desk or mounted on a wall, a link member 10 linking the monitor 120 with the base member 130, and a main bracket 170 disposed between the monitor 120 and the link member 10. The monitor support also includes a pivot part 150 to enable the monitor 120 to pivot on the main bracket 170 so that the monitor may be rotated about an axis extending substantially at right angles to the plane of the monitor screen, and a monitor bracket 180 detachably mounted to the monitor 120 and situated between the monitor 120 and the main bracket 170.

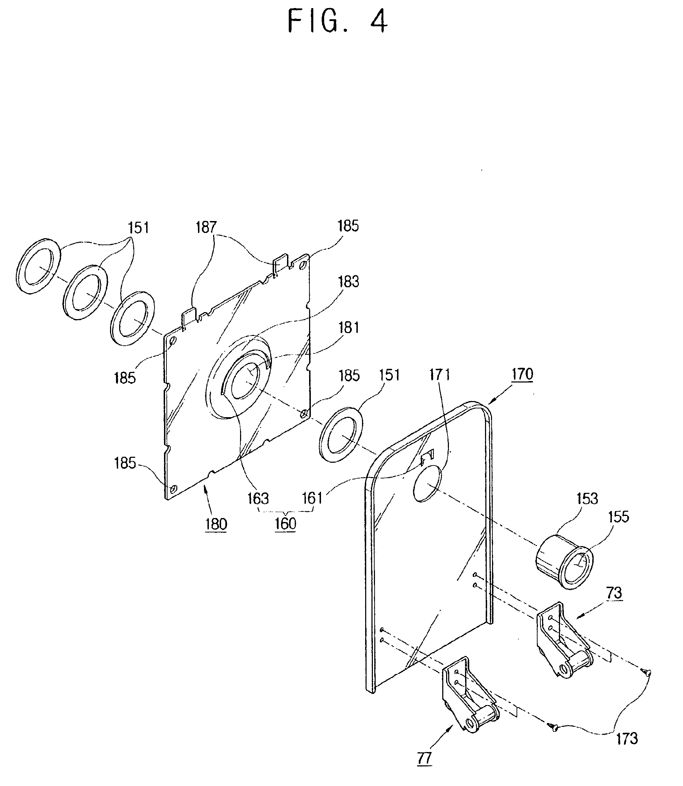

As shown in Figure 4, the pivot part 150 includes a first circular through hole 171 formed in the main bracket 170, a second circular through hole 181 formed in the monitor bracket 180, a plurality of washers 151 aligned with the first and second through holes 171,181, and a hub 153 which locates through the first and second through holes 171,181 to enable the main and monitor brackets 170,180 to pivot relative to each other against a frictional force connecting them together.

The second through hole 181 is formed in a raised part 183 of the monitor bracket 180 which extends toward the main bracket 170.

The hub 153 is inserted through the first through holes 171, a washer 151, the second through hole 181 and then the remaining washers. The end of the hub 153 is then hammered to splay its end to form a radially extending rim to prevent removal of the hub 153. The washers 151 act as springs to keep a constant friction acting between the main bracket 170 and the monitor bracket 180. The hub 153 is a hollow cylindrical member defining a through hole 155 for a cable 122 to pass and to electrically connect the monitor 120 to a power source.

The pivot part 150 further includes a pivot angle restricting part 160 to restrict the angle through which the monitor bracket 180 may rotate relative to the main bracket 170.

The pivoting angle restricting part 160 includes a pivot projection 161 protruding from a surface of the main bracket 170 adjacent to the first through hole 171, and a guide slot 163 having an arcuate shape formed in the raised part 183 of monitor bracket 180 adjacent to and coaxial with the second through hole 181. The guide slot 163 receives the pivot projection 161 and restricts movement of the pivot projection 161 beyond the extremities of the guide slot 163.

The pivot projection 161 is formed by partially cutting a U-shaped slot in the main bracket 170 adjacent to the first through hole 171 to form a tab and then by subsequently bending the tab by 90° so that it upstands from the surface of the main bracket 170.

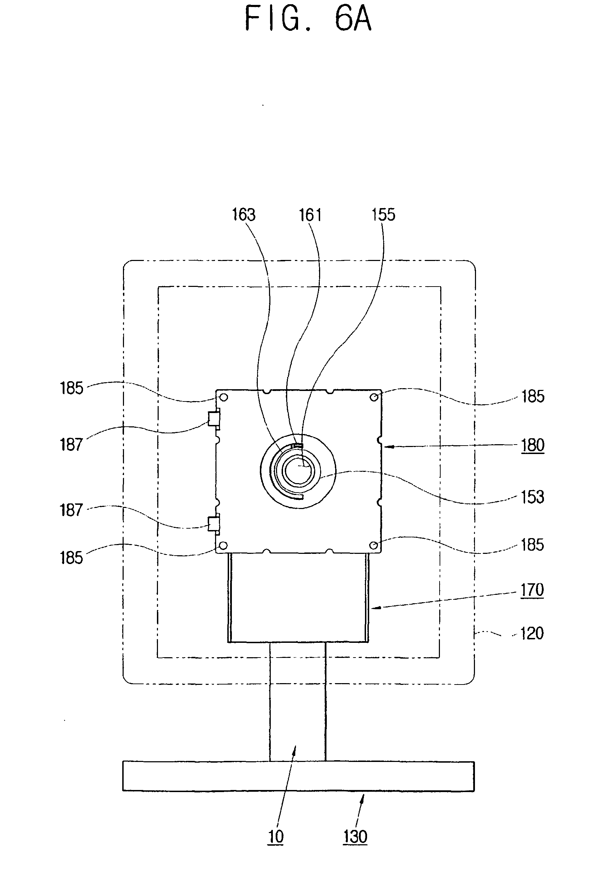

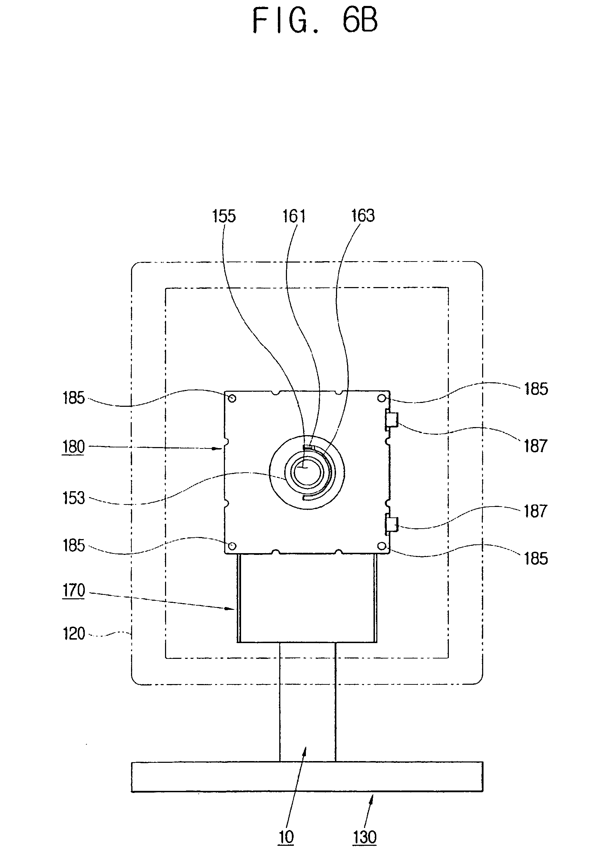

In a preferred embodiment, the angle through which the monitor 120 may pivot is restricted to within 180° from left to right as shown in Figures 6A and 6B by the guide slot 163. However, any other pivoting angle limits may alternatively be enabled.

It will be appreciated that in an alternative embodiment, the pivot projection 161 may be provided on the monitor bracket 180, and the guiding slot 163 may be provided on the main bracket 170.

The monitor bracket 180 has through holes 185 at its corners to enable attachment to the monitor 120. The rear of monitor 120 has a plurality of screw holes 125 that correspond in position so the through holes 185 in the monitor bracket 180. First screws 126 are used to attach the monitor 120 to the monitor bracket 180. The through holes 185 of the monitor bracket 180 and the screw holes 125 of the monitor main body 120 are located in accordance with standards set by VESA, so that a user may use any monitor with the monitor bracket 180.

The monitor bracket 180 has a pair of first hooks 187 extending from an upper edge of the monitor bracket 180 to enable the monitor bracket 180 to be attached to the rear of the monitor 120 easily. The rear of the monitor 120 has a corresponding pair of first hook receivers 127 to receive the first hooks 187 when the monitor bracket 180 and monitor 120 are mounted to each other.

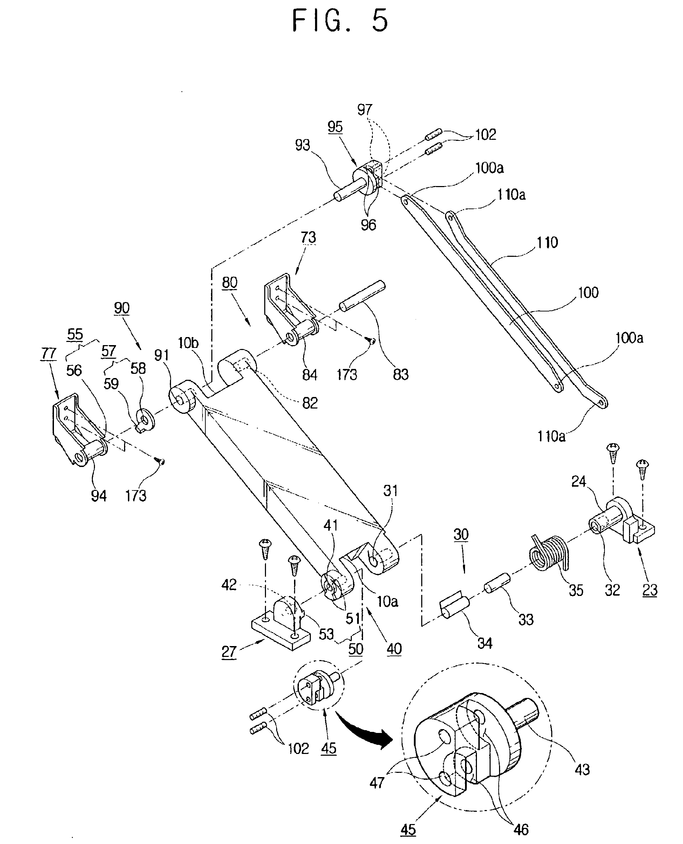

As shown in Figures 1, 3 and 5, the link member 10 has a lower end 10a pivotally mounted to the base member 130 via a base hinge 20 and an upper end 10b rotatably combined to the main bracket 170 via a main hinge 70. The base hinge 20 includes a pair of first and second supporting brackets 23,27 spaced from each other at a predetermined distance and fastened onto the base member 130 with second screws 131, and the main hinge 70 includes a pair of third and fourth supporting brackets 73,77 spaced from each other at a predetermined distance and fastened onto the main bracket 170 with third screws 173.

The base member 130 has a link member accommodating part 135 in a central region thereof to accommodate the link member 10.

The base hinge 20 includes first and second base hinge parts 30,40 to pivotally mount opposite sides of the lower end 10a of the link member 10 to the first and second supporting brackets 23,27, respectively.

The first base hinge part 30 includes a first pin accommodating part 31 formed on a first side of the lower end 10a of the link member 10, a first pin supporting part 32 formed inside the first supporting bracket 23, and a first hinge pin 33 having a first end rotatably inserted in the first pin accommodating part 31 and a second end fixedly fitted into the first pin supporting part 32. The first base hinge part 30 also includes a first frictional spring 34 interposed between the first hinge pin accommodating part 31 and the first hinge pin 33, to provide a force to resist rotation of the link member 10 about the first hinge pin 33.

The first frictional spring 34 is shaped like a flat spring and has a first end to which the first hinge pin 33 is fixedly fitted, and a second end combined to the first pin accommodating part 31. Thus, the first frictional spring 34 fastened to the link member 10 is rotatably combined to the first hinge pin 33 fastened to the first supporting bracket 23 with a predetermined friction. It is preferable that the friction is stronger than torque generated due to the weight of the monitor 120, the link member 10 and the main bracket 170.

The first supporting bracket 23 includes a spring supporting part 24 on which is provided a torsion spring 35 having a bias that acts in a direction against downward rotation of the link member 10 against the base member 130.

The torsion spring 35 has a first end supported by the first supporting bracket 23, and a second end supported by the link member 10. It is preferable that the biasing force of the torsion spring 35 is approximately equal to the torque generated due to the weight of the monitor 120. Thus, because the weight of the monitor 120 and the bias of the torsion spring 35 offset each other, the user may easily rotate the link member 10 against the base member 130 with a small force which is only strong enough to overcome the friction between the first frictional spring 34 and the first hinge pin 33.

The second base hinge part 40 includes a second pin accommodating part 41 formed on a second side of the lower end 10a of the link member 10, a second pin supporting part 42 formed inside the second supporting bracket 27, and a second hinge pin 43 having a first end rotatably inserted in the second pin accommodating part 41 and a second end fitted in the second pin supporting part 42. The second base hinge part 40 also includes a first link supporting part 45 incorporated with the second end of the second hinge pin 43.

The first link supporting part 45 is provided between the opposite sides of the lower end 10a of the link member 10. Thus, the first link supporting part 45 is incorporated with the second hinge pin 43 fitted into the second supporting bracket 27, and the second hinge pin 43 is rotatably inserted into the second pin accommodating part 41.

The second base hinge part 40 is provided with a rotating angle restricting part 50 to restrict the angle of rotation of the link member 10 relative to the base member 130 within a predetermined range.

The rotating angle restricting part 50 includes a pair of fan shaped grooves 51 formed on an outside of the second side of the lower end 10a of the link member 10, around the second pin accommodating part 41, and radially opposed to each other. A corresponding pair of stoppers 53 is provided around the second pin supporting part 42 of the second supporting bracket 27. One stopper engages with a corresponding fan shaped groove 51 when the link member is rotated in one direction and the other stopper engages with the other groove when the link member is rotated in the opposite direction. Thus, the rotating angle of the link member 10 relative to the base member 130 is restricted to within a predetermined angle defined by the shape of the grooves and the stoppers. The angular range may be 0° through 60°. However, the angular range may be altered by changing the design of the fan shaped grooves 51 and the stoppers 53.

The main hinge 70 includes first and second main hinge parts 80,90 to rotatably combine opposite sides of the upper end 10b of the link member 10 to the third and fourth supporting brackets 73,77, respectively.

The third and fourth supporting brackets 73,77 have first ends fastened onto a lower part of the main bracket 170 with the third screws 173. The third and fourth supporting brackets 73,77 also have second ends, each provided with second and third frictional springs 84,94 which are shaped like a flat spring and to which third and fourth hinge pins 83,93 (to be described later) are rotatably inserted with a predetermined friction.

The first main hinge part 80 includes a third pin supporting part 82 formed on a first side of the upper end 10b of the link member 10, and a third hinge pin 83 has its first end fixedly fitted into the third pin supporting part 82. The first main hinge part 80 also includes the second frictional spring 84 incorporated with the third supporting bracket 73 to rotatably accommodate a second end of the third hinge pin 83 therein, with a force that resists rotation of the supporting bracket 73 about the third hinge pin 83. That is, the third hinge pin 83 is fitted into the third pin supporting part 82 of the link member 10, and rotatably inserted in the second frictional spring 84 incorporated with the third supporting bracket 73 with a predetermined friction.

The second main hinge part 90 includes a third pin accommodating part 91 formed on a second side of the upper end 10b of the link member 10, a second link supporting part 95 provided between the opposite sides of the upper end 10a of the link member 10, and a fourth hinge pin 93 having a first end incorporated with the second link supporting part 95 and rotatably inserted in the third pin accommodating part 91. The second main hinge part 90 also includes the third frictional spring 94 incorporated with the fourth supporting bracket 77 to rotatably accommodate a second end of the fourth hinge pin 93 therein, with a force resisting rotation of the fourth hinge pin 93.

The fourth hinge pin 93 is rotatably inserted in the third pin accommodating part 91 of the link member 10, and rotatably accommodated in the third frictional spring 94 incorporated with the fourth supporting bracket 77 with a predetermined friction.

The second link supporting part 95 is provided between the opposite sides of the upper end 10b of the link member 10, and incorporated with the fourth hinge pin 93. The first and second link supporting parts 45,95 are linked by auxiliary link members 100,110 (to be described later), so that the second link supporting part 95 is rotated together with the auxiliary link members 100, 110.

Thus, when the monitor 120 is tilted against the link member 10 in upward and downward directions, the second link supporting part 95 and the auxiliary link members 100,110 do not rotate because only the second and third frictional springs 84,94 incorporated with the main bracket 170 are rotated about the third and fourth hinge pins 83,93 respectively. Herein, it is preferable that the friction between the third hinge pin 83 and the second frictional spring 84, and the friction between the fourth hinge pin 93 and the third frictional spring 94 are stronger than the torque due to the weight of the monitor main body 120.

The second main hinge part 90 includes a tilting angle restricting part 55 to restrict a tilting angle of the monitor 120 relative to the link member 10 within a predetermined range.

The tilting angle restricting part 55 includes an arc cutting part 56 formed by partially cutting the fourth supporting bracket 77 adjacent to the third frictional spring 94. The tilting angle restricting part 55 also includes a tilting restricting washer 57 formed with a through hole 58 and fixedly fitted on the fourth hinge pin 93 so as to rotate together with the fourth hinge pin 93, and a projection 59 which selectively engages with opposite ends of the arc cutting part 56 according to a tilting direction of the monitor 120.

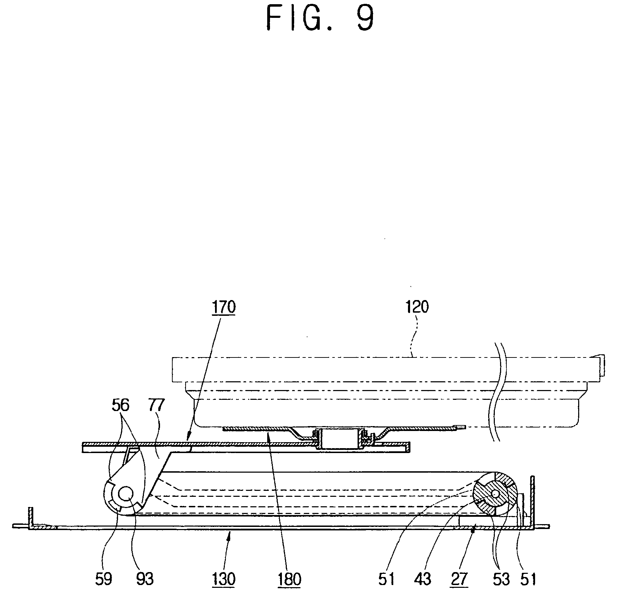

Thus, the tilt angle of the monitor 120 against the link member 10 is restricted within a predetermined angle. However, the monitor 120 can be tilted in a backward direction relative to the link member 10, and may be completely laid on the link member 10 as shown in Figure 9. Further, an angular range through which the monitor may tilt can be altered by changing the design of the arc cutting part 56 and the projection 59 of the tilting restricting washer 57.

With the above configuration, the link member 10 may by rotated in forward and backward directions against the base member 130, and the monitor 120 may be tilted relative to the link member 10 within a predetermined range. In addition, rotation of the link member 10 relative to the base member 130 may be interlinked with rotation of the monitor main body 120 relative to the link member 10. To accomplish this, the auxiliary link members 100,110 transmit a rotating motion of the link member 10 against the base member 130 to a tilting motion of the monitor main body 120.

The auxiliary link members 100,110 are bar shaped and are rotatably combined to the first and second link supporting parts 45,95. In each of the first and second link supporting parts 45,95, auxiliary link accommodating parts 46,96 are provided to which opposite ends of the auxiliary link members 100,110 are inserted. Also, provided in each of the first and second link supporting parts 45,95 are a plurality of pin holes 47,97 spaced from each other at a predetermined distance to communicate with the auxiliary link accommodating parts 46,96. On the opposite ends of the auxiliary link members 100,110 are formed through holes 100a,110a to be aligned with the pin holes 47,97 respectively.

Thus, in a state that both ends of the auxiliary link member 100,110 are respectively inserted into the auxiliary link accommodating parts 46,96 of the first and second link supporting parts 45,95, and the through holes 100a,110a formed on both ends of the auxiliary link member 100,110 are respectively aligned with the pin holes 47,97 formed on the first and second link supporting parts 45,95, the auxiliary link member 100,110 are coupled to the first and second link supporting parts 45,95 by part of a plurality of link coupling pins 102, respectively. Therefore, the pair of auxiliary link members 100,110 move in parallel with each other.

With the above configuration, the tilt of the monitor 120 and the rotation of the link member 10 are controlled as follows.

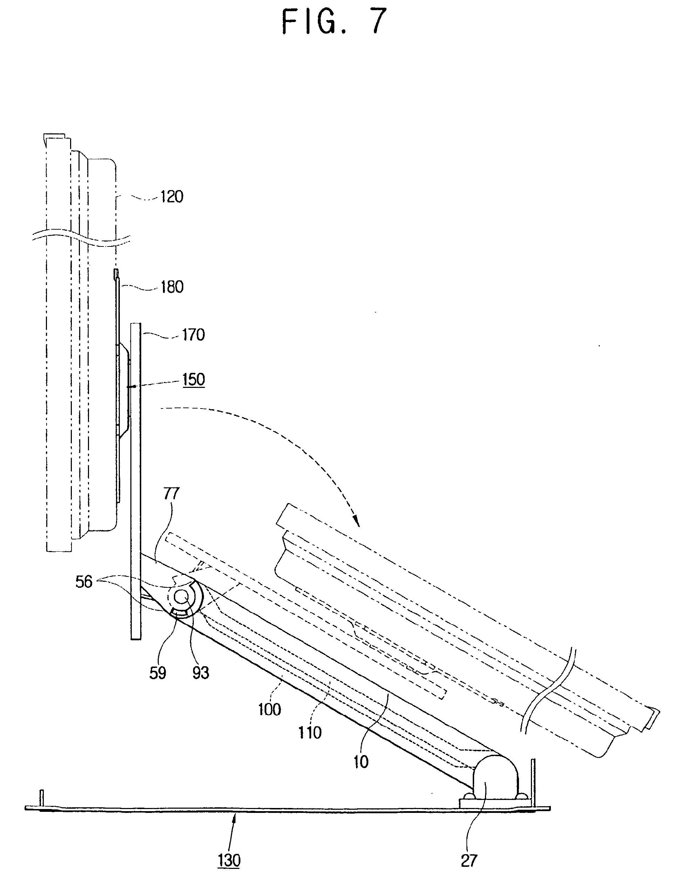

In a case where the monitor main body 120 is tilted against the link member 10, as shown in Figure 7, from a vertical position to a position in which it overlies the link member 10 by applying sufficient force to overcome the friction between the third hinge pin 83 and the second frictional spring 84, and the friction between the fourth hinge pin 93 and the third friction spring 94, the second and third frictional springs 84,94 incorporated with the main bracket 170 are rotated about the third and fourth hinge pins 83,93. Here, the tilting angle of the monitor main body 120 against the link member 10 is restricted within a predetermined angle by part of the arc cutting part 56 of the fourth supporting bracket 77, and the projection 59 of the tilting restricting washer 57 fitted on the fourth hinge pin 93. Further, the monitor main body 120 is tilted in the backward direction against the link member 10, and may be completely laid on the link member 10 (refer to Figure 9).

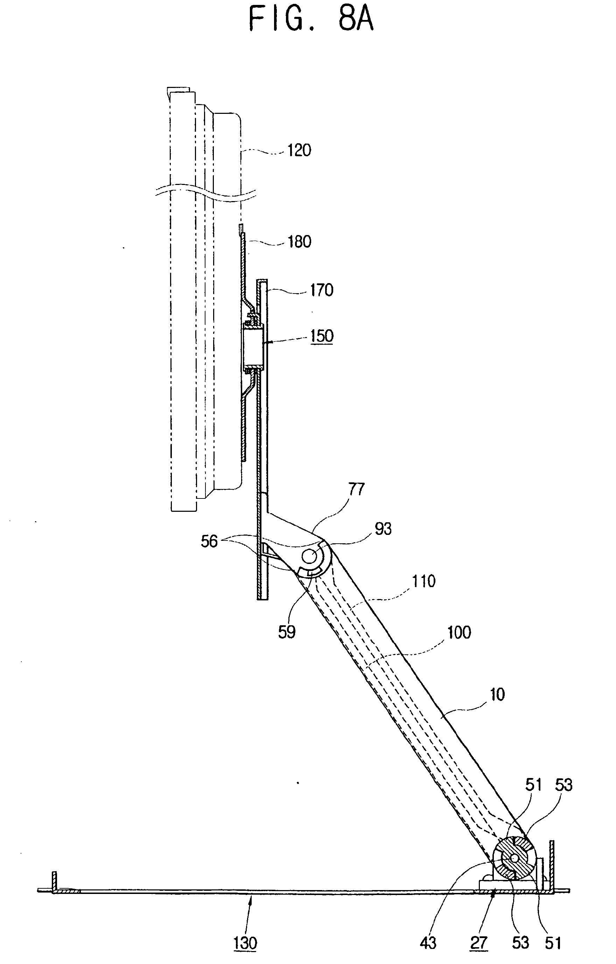

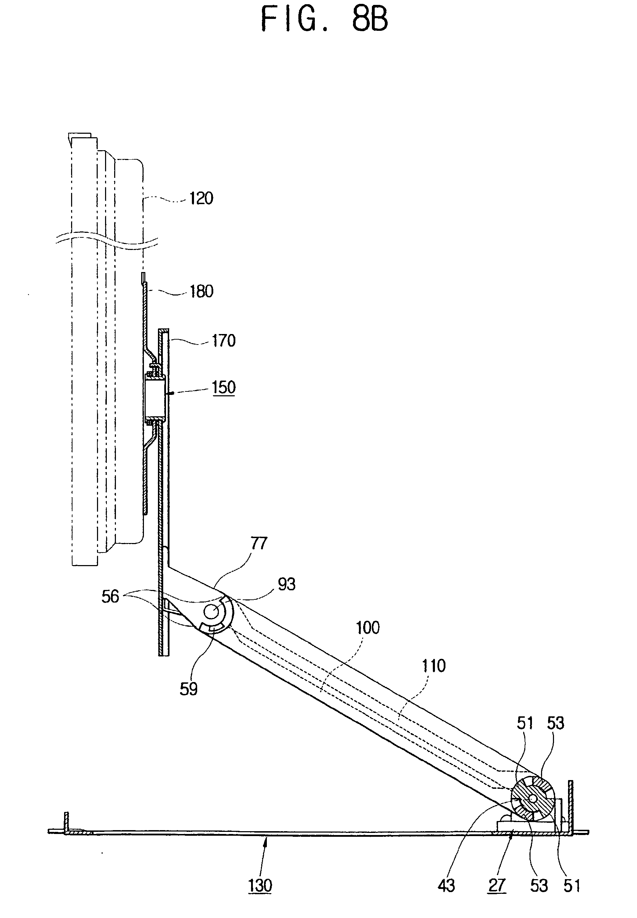

In a case where the link member 10 is pivoted relative to the base member 130, as shown in Figures 8A and 8B, if the link member 10 is forward pressed, the link member 10 is forward rotated about an axis of the first and second hinge pins 33,43 (refer to Figure 8A). Here, the link member 10 is slowly rotated because of the elasticity of the torsion spring 35 provided on the first base hinge part 30.

According to the forward rotation of the link member 10, the second link supporting part 95 provided between the opposite sides of the upper end 10b of the link member 10 is rotated in a clockwise direction at a predetermined angle by part of the auxiliary link members 100,110. Herein, the rotating motion of the second link supporting part 95 is transmitted to the fourth hinge pin 93 and the fourth supporting bracket 77 is rotated together with the fourth hinge pin 93, thereby tilting the monitor main body 120. Herein, the reason that the fourth hinge pin 93 and the fourth supporting bracket 77 work together is that predetermined friction is provided between the fourth hinge pin 93 and the third frictional spring 94 of the fourth supporting brackets 77. Thus, the tilt of the monitor main body 120 against the link member 10 is interlocked with the rotation of the link member 10 against the base member 130, so that the monitor main body 120 is controlled in height while maintaining a tilt position. Further, interlocking motion between the monitor main body 120 and the link member 10 may be adjusted by changing a length and position of the auxiliary link members 100,110.

If the link member 10 is more forwardly pressed, the link member 10 is rotated until one of the fan shaped grooves 51 formed on the lower end 10a of the link member 10 is engaged with one of the stoppers 53 formed on the second supporting bracket 27. Here, the link member 10 is not forwardly rotated anymore. Il the monitor main body 120 is downwardly pressed toward the base member 130, the monitor main body 120 may be completely laid on the base member 130 (refer to Figure 9).

A process of altering the monitor of the present invention from a completely folded state into an unfolded state is performed in reverse to the above.

As described above, because the monitor main body 120 is completely laid on the base member 130, a packing volume of the monitor is decreased, thereby decreasing costs to store and carry the monitor.

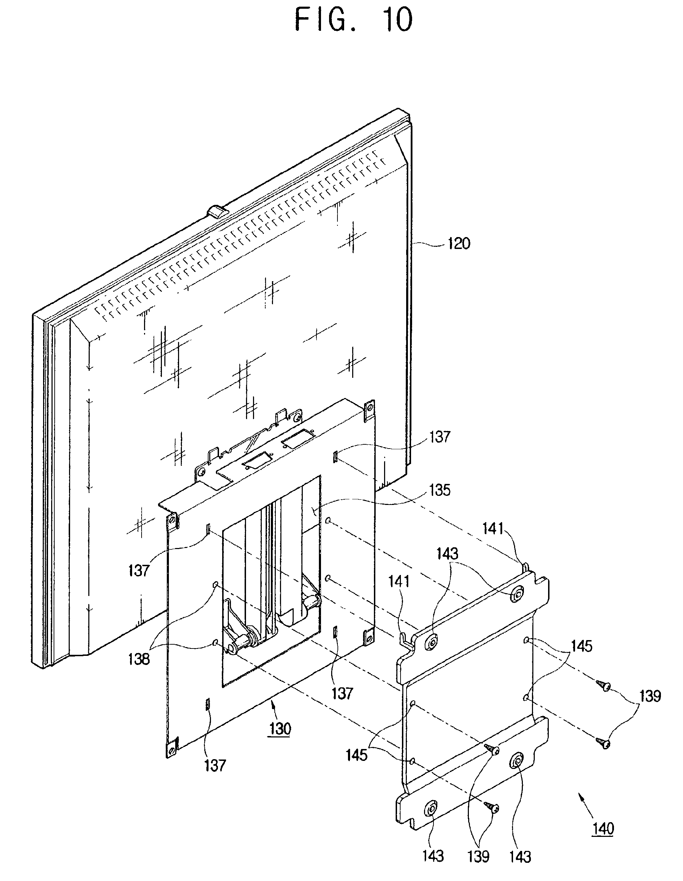

As shown in Figure 10, the monitor according to the present invention further includes a base bracket 140 having one side mountable to the rear of the base member 130 so that the other side can be mounted onto an inclined plane such as a wall or an arm stand, etc.

The base bracket 140 is formed with a plurality of second hooks 141 that engage with a plurality of second hook holders 137 formed on the base member 130 to attach the base bracket 140 onto the rear of the base member 130. The base bracket 140 is also formed with a plurality of first combining holes 143 to attach the base bracket 140 to an inclined plane, and a plurality of second combining holes 145 to attach the base bracket 140 with the base member 130. Further, the base member 130 is formed with a plurality of third combining holes 138 in correspondence to the second combining holes 145 of the base bracket 140, so that the base bracket 140 is combined to the base member 130 with a plurality of fourth screws 139.

Herein, the second combining holes 145 of the base bracket 140 and the third combining holes 138 of the base member 130 are spaced according to the VESA, so that the monitor may be installed onto various arm stands complying with this standard.

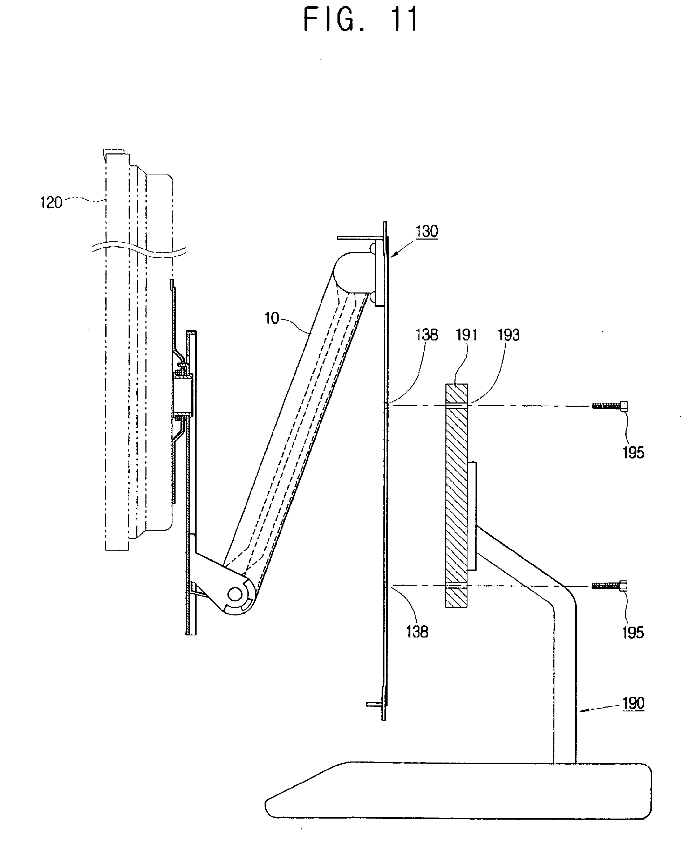

Figure 11 is a sectional view illustrating a monitor being mounted to an arm stand. As shown therein, an arm stand 190 is provided with a monitor supporting part 191 at an upper part thereof, and the monitor supporting part 191 is formed with a plurality of fourth combining holes 193 according to the VESA. Therefore, the third combining holes 138 of the base member 130 are aligned with the fourth combining holes 193 of the monitor supporting part 191. Fifth screws 195 are then inserted into the third combining holes 138 formed on the base member 130 at a rear of the monitor supporting part 171 by passing through the fourth combining holes 193 of the monitor supporting part 191. Thus, the monitor may be easily mounted on various arm stands according to the VESA.

In this embodiment, the torsion spring 35 is provided in the first base hinge part 30. However, the torsion spring may be provided in at least one of the first and second base hinge parts.

In this embodiment, the rotating angle restricting part 50 is provided in the second base hinge part 40. However, the rotating angle restricting part may be provided in at least one of the first and second base hinge parts.

In this embodiment, the tilting angle restricting part 55 to restrict the tilting angle of the monitor main body 120 is provided in the second main hinge part 90. However, the tilting angle restricting part may be provided in at least one of the first and second main hinge parts.

As described above, the present invention provides a monitor in which a monitor main body is controlled in tilt, planar rotation, and height, while maintaining tilt position regardless of the height control.

Further, the present invention provides a monitor which properly adjusts a tilting angle of a monitor main body against a base member, and decreases costs to store and carry the monitor by decreasing the packing volume thereof.

Further, the present invention provides a monitor in which a base member is installed onto an inclined plane such as a wall, an arm stand, etc., and more particularly, a monitor which is easily installed onto various arm stands according to VESA.

Although a few embodiments of the present invention have been shown and described, it would be appreciated by those skilled in the art that changes may be made in these embodiments without departing from the scope of the appended claims.

## Claims

1. A monitor support comprising a support arm (10), a support bracket (170) connected to one end of the support arm (10) and a support plate (180) for attachment to a monitor, the support bracket (170) and support plate (180) including coupling means (151,153) to mount a monitor to the support arm (10), the coupling means (151,153) being operable to enable rotation of the support plate (180) relative to the support bracket (170) **characterised in that** the other end (10a) of the support arm (10) is pivotally connected to a base (130).

2. A monitor support according to claim 1, wherein the coupling means (151,153) includes a hub member (153) extending between the support plate (180) and the support bracket (170), the support plate (180) and/or the support bracket (170) being rotatably mounted on the hub member (153).

3. A monitor support according to claim 2 wherein the support bracket (170) and support plate (180) each have a corresponding aperture (171,181) to receive the hub member (153).

4. A monitor support according to claim 3, wherein at least one washer (151) is disposed on the hub (153) between the support bracket (170) and the support plate (180).

5. A monitor support according to any of claims 2 to 4 wherein the hub member (153) has a radially protruding rim at each end.

6. A monitor support according to claim 5 wherein at least one washer (151) is disposed on the hub member (153) between a rim and the support bracket (170) and/or support plate (180) so that the support plate (180) and support bracket (170) are held together with a predetermined frictional force which must be overcome to rotate the support plate (180) relative to the support bracket (170).

7. A monitor support according to claim 6 wherein the rim at one end of the hub member (153) is formed after insertion of the hub (153) through the aperture (181) in the support plate (180) and support bracket (170) by splaying said end of the hub member (153).

8. A monitor support according to any preceding claim, comprising means (160) to restrict the angle of rotation of the support plate (180) relative to the support bracket (170).

9. A monitor support according to claim 8 wherein said means (160) comprises an arcuate guide slot (163) in either the support plate (180) or bracket (170) coaxial with said apertures (171,181) and a corresponding projection (161) in either the support bracket (170) or plate (180), respectively, the guide slot (163) and projection (161) cooperating to limit the angle through which the support plate (180) can rotate relative to the support bracket (170).

10. A monitor support according to claim 9, wherein the support plate (180) has a region (183) deflected out of the plane of the support plate (180) and extending toward the support bracket (170), the aperture (181) and the guide slot (163) being formed in the deflected region (183)

11. A monitor support according to claim 10 wherein the deflected region (183) is located in the centre of the support plate (180).

12. A monitor support according to any claims 2 to 10, when dependent upon claim 2, wherein the hub member (153) has a hole (155) extending through the centre thereof to allow a cable to pass therethrough to be connected to a monitor attached to the support plate (180).

13. A monitor support according to any preceding claim, wherein the connection to the base (130) allows for rotation of the support arm (10) about a first axis relative to the base (130), the support bracket (170) being pivotally connected to said end of the support arm (10) for rotation about a second axis parallel to the first axis.

14. A monitor support according to claim 13 wherein the support bracket (180) includes at least one screw hole (185) therethrough to allow a monitor (120) to be secured to the support bracket (180).

15. A monitor support according to claim 14 wherein the screw holes (185) are positioned in accordance with Video Electronic Standard Association (VESA) standards.

16. A monitor support according to any of claims 13 to 15 wherein the support bracket (180) is formed with at least one first hook (187) extended from an edge thereof to be received in a corresponding aperture (127) on a rear of a monitor (120).

17. A monitor support according to any of claims 13 to 16 further comprising a base bracket (140) attachable to the base (130) to allow the base (130) to be mounted on an inclined plane wherein the base bracket (140) is provided with at least one hook (141) engagable with at least one corresponding slot (137) formed in the base (130).

18. A monitor according to claim 17 wherein the base bracket (140) is provided with at least one securing hole (143) to allow the base bracket (140) to be secured to an inclined plane.

19. A monitor support according to claim 17 or claim 18 wherein the base bracket (140) is provided with at least one connection hole (145) to allow the base bracket (140) to be connected to the base (130) and the base (130) is provided with at least one connection hole (138) corresponding to the connection hole (145) of the base bracket (140).

20. A monitor support according to claim 19 wherein the connection hole (145) of the base bracket (140) and the connection hole (138) of the base (130) are positioned according to VESA (Video Electronic Standard Association) standards.

21. A monitor support according to any of claims 13 to 20 further comprising a base hinge which pivotally mounts said other end (10a) of the support arm (10) to the base (130), the base hinge comprising a pair of first and second support brackets (23,27) spaced from each other at a predetermined distance and fastened onto the base (130) and first and second base hinge parts (30,40) to rotatably combine opposite sides of said other end (10a) of the support arm (10) to the first and second supporting brackets (23,27), respectively.

22. A monitor support according to claim 21 wherein the first base hinge part (30) comprises a first pin accommodating part (31) formed on a first side of the other end (10a) of the support arm (10), a first pin supporting part (32) formed inside the first supporting bracket (23), a first hinge pin (33) having a first end rotatably inserted in the first pin accommodating part (31) and a second end fitted into the first pin supporting part (32) and a first frictional spring (34) interposed between the first hinge pin accommodating part (31) and the first hinge pin (33) and having a force resisting rotation of the first hinge pin (33).

23. A monitor support according to claim 21 or 22 wherein the first supporting bracket (23) comprises a spring supporting part (24) to protrude inwardly and provided thereon with a torsion spring (35) having an elasticity to act in an opposite direction to a downward rotation of the support arm (10) against the base (130).

24. A monitor support according to any of claims 21 to 23 wherein the second base hinge part (40) comprises a second pin accommodating part (41) formed on a second side of the other end (10a) of the support arm (10), a second pin supporting part (42) formed inside the second supporting bracket (27), a second hinge pin (43) having a first end rotatably inserted in the second pin accommodating part (41) and a second end fitted into the second pin supporting part(42) and a first link supporting part (45) fixedly fitted into the second supporting bracket (27) and incorporated with the second end of the second hinge pin (43).

25. A monitor support according to any of claims 21 to 24 wherein at least one of the first and second base hinge parts (30,40) is provided with a rotating angle restriction part (50) to restrict a rotating angle of the support arm (10) against the base (130) within a predetermined range.

26. A monitor support according to claim 25 wherein the rotating angle restricting part (50) comprises a pair of fan shaped grooves (51) formed on the second side of the other end (10a) of the support arm (10), around the second pin accommodating part (41), to be opposite each other, and a pair of stoppers (53) provided around the second pin supporting part (42) of the second supporting bracket (27) and, selectively engaged with the pair of fan shaped grooves (51) according to a rotating direction of the support arm (10).

27. A monitor support according to any of claims 24 to 26 further comprising a main hinge which pivotally mounts said end (10b) of the support arm (10) to the support bracket (170), the main hinge comprising a pair of third and fourth supporting brackets (73,77) spaced from each other at a predetermined distance and fastened onto the support bracket (170) wherein the main hinge includes first and second main hinge parts (80,90) to rotatably combine opposite sides of said end (10b) of the support arm (10) to the third and fourth supporting brackets (73,77), respectively.

28. A monitor support according to claim 27 wherein the first main hinge part (80) comprises a third pin supporting part (82) formed on a first side of said end (10b) of the support arm (10), a third hinge pin (83) having a first end fitted into the third pin supporting part (82) and a second frictional spring (84) incorporated with the third supporting bracket (73) and to rotatably accommodate a second end of the third hinge pin (83) therein, with a force resisting rotation of the third hinge pin (83).

29. A monitor support according to claim 28 wherein the second main hinge part (90) comprises a third pin accommodating part (91) formed on a second side of said end (10b) of the support arm (10), a second link supporting part (95) provided between the opposite sides of said end (10b) of the support arm (10), a fourth hinge pin (93) having a first end incorporated with the second link supporting part (95) and rotatably inserted in the third pin accommodating part (91), and a third friction spring (94) incorporated with the fourth supporting bracket (77) and to rotatably accommodate a second end of the fourth hinge pin (93) therein, with a force resisting rotation of the fourth hinge pin (93).

30. A monitor support according to any of claims 27 to 29 wherein the second main hinge part (90) comprises a tilting angle restricting part (55) to restrict a tilting angle of a monitor main body (120) against the support arm (10) within a predetermined range.

31. A monitor support according to claim 30 wherein the tilting angle restricting part (55) comprises an arc cutting part (56) formed on the fourth supporting bracket (77) adjacent to the third frictional spring (94) and a tilting restricting washer (57) formed with a washer through hole (58) and fixedly fitted on the fourth hinge pin (93) and a projection (59) selectively engaged with opposite ends of the arc cutting part (56) according to a tilting direction of a monitor main body (120), wherein the tilting angle of a monitor main body (120) against the support arm (10) is restricted within a predetermined range.

32. A monitor support according to any of claims 29 to 31 wherein a swinging linkage mechanism (45,95,100,110) of the monitor support arm comprises a pair of auxiliary link members (100,110) which are rotatably combined to the first and second link supporting parts (45,95).

33. A monitor support according to claim 32 wherein the first and second link supporting parts (45,95) are provided with a plurality of pin holes (47,97) spaced from each other at a predetermined distance, and on opposite ends of the auxiliary link members (100,110) are provided through holes (100a,110a) to be aligned with the pin holes (47,97).

34. A monitor support according to claim 33 further comprising a plurality of link coupling pins (102) inserted through the pin holes (47,97) of the first and second link supporting parts (45,95) and the pin through holes (100a,110a) of the auxiliary link members (100,110) to couple the auxiliary link members (100,110) with the first and second link supporting parts (45,95).

35. A monitor support according to any of claims 13 to 34 further comprising a support arm accommodating part (135) provided at a centre of the base (130) to accommodate the support arm (10).

36. A monitor support according to claim 22 wherein the first frictional spring (34) comprises a first end fitted to the first hinge pin (33) and a second end combined to the first pin accommodating part (31).

37. A monitor support arm according to claim 36 wherein the first frictional spring (34) is fastened to the support arm (10) and rotatable combined to the first hinge pin (33) which is fastened to the first supporting bracket (23) with a predetermined friction.

38. A monitor support according to claim 37 wherein the predetermined friction is stronger than a torque due to a weight of a monitor main body (120).

39. A monitor support according to claim 23 wherein the torsion spring (35) comprises a first end supported by the first supporting bracket (23) and a second end supported by the support arm (10) causing a force to act in an opposite direction to a forward rotation of a monitor main body (120) linked to the support arm (10).

40. A monitor support according to claim 23 or claim 39 wherein the elasticity of the torsion spring (35) is equal to a torque due to a weight of a monitor main body (120) allowing the weight and the elasticity to offset each other and rotate the support arm (10) against the base (130) with a small force.

41. A monitor support according to claim 32 wherein the first and second link supporting parts (45,95) are linked by the auxiliary link members (100,110) so that the second link supporting part (95) is rotated together with the auxiliary link members (100,110).

42. A monitor support according to claim 32 or claim 41 wherein when a monitor main body (120) can be tilted against the support arm (10) in upward and downward directions, the second and third frictional springs (84,94) are rotated about the third and fourth hinge pins (83,93) preventing the auxiliary link members (100,110) and the second link supporting part (95) from rotating.

43. A monitor support according to claim 42 wherein a friction between the third hinge pin (83) and the second frictional spring (84) and a friction between the fourth hinge pin (93) and the third frictional spring (94) are stronger than torque due to a weight of a monitor main body (120).

44. A monitor support according to claim 31 wherein a range of the tilting angle is determined by a design of the arc cutting part (56) and the projection (59) of the tilting restricting washer (57).

45. A monitor support according to claim 32 wherein the auxiliary link member (100,110) transmit a rotating motion of the support arm (10) against the base (130) to a tilting motion of a monitor main body (120).

46. A monitor support according to any of claims 13 to 45 wherein a monitor main body (120) can be tilted in a backward direction against the support arm (10) to lay parallel to the support arm (10).

47. A monitor support according to claim 29 wherein a rotating motion of the second link supporting part (95) is transmitted to the fourth hinge pin (93) and the fourth supporting bracket (77) is rotated together with the fourth hinge pin (93) thereby tilting a monitor main body (120).

48. A monitor support according to any of claims 13 to 47 wherein a tilt of a monitor main body (120) against the support arm (10) is interlocked with a rotation of the support arm (10) against the base (130) so that a monitor main body (120) is controlled in height while maintaining a tilt position.

49. A monitor support according to claim 17 further comprising an arm stand (190) provided with a monitor supporting part (191) having at least one connecting hole (193) positioned according to VESA standards.

50. A monitor support according to claim 49 wherein the connecting hole (138) of the base (130) is aligned with the connecting hole (193) of the monitor supporting part (191) to fasten the base (130) to the monitor supporting part (191) so that a monitor may be mounted to the arm stand (190).

51. A monitor support according to any preceding claim comprising a swinging linkage mechanism (45,95,100,110) extending between the base (130) and the support bracket (170) operable to cause the support bracket (170) to rotate relative to the support arm (10) as the support arm (10) rotates relative to the base (130).

## Patentansprüche

1. Bildschirmtragevorrichtung, einen Tragarm (10), einen Tragbock (170), der mit einem Ende des Tragarms (10) verbunden ist, und eine Tragplatte (180) zum Anbringen an einem Bildschirm umfassend, wobei der Tragbock (170) und die Tragplatte (180) Kupplungseinrichtungen (151, 153) zum Montieren eines Bildschirms an dem Tragarm (10) umfassen, wobei die Kupplungseinrichtungen (151, 153) so betätigt werden können, dass Drehung der Tragplatte (180) relativ zu dem Tragbock (170) ermöglicht wird, **dadurch gekennzeichnet, dass** das andere Ende (10a) des Tragarms (10) schwenkbar mit einer Basis (130) verbunden ist.

2. Bildschirmtragevorrichtung nach Anspruch 1, wobei die Kupplungseinrichtungen (151, 153) ein Nabenelement (153), das sich zwischen der Tragplatte (180) und dem Tragbock (170) erstreckt, umfassen, wobei die Tragplatte (180) und/oder der Tragbock (170) drehbar an dem Nabenelement (153) montiert sind.

3. Bildschirmtragevorrichtung nach Anspruch 2, wobei der Tragbock (170) und die Tragplatte (180) jeweils eine entsprechende Öffnung (171, 181) zum Aufnehmen des Nabenelements (153) aufweisen.

4. Bifdschirmtragevorrichtung nach Anspruch 3, wobei wenigstens eine Zwischenscheibe (151) an der Nabe (153) zwischen dem Tragbock (170) und der Tragplatte (180) angeordnet ist.

5. Bildschirmtragevorrichtung nach einem der Ansprüche 2 bis 4, wobei das Nabenelement (153) an jedem Ende einen radial vorstehenden Kranz aufweist.

6. Bildschirmtragevorrichtung nach Anspruch 5, wobei wenigstens eine Zwischenscheibe (151) so an dem Nabenelement (153) zwischen einem Kranz und dem Tragbock (170) und/oder der Tragplatte (180) angeordnet ist, dass die Tragplatte (180) und der Tragbock (170) mit einer vorgegebenen Reibungskraft zusammengehalten werden, die überwunden werden muss, um die Tragplatte (180) relativ zu dem Tragbock (170) zu drehen.

7. Bildschirmtragevorrichtung nach Anspruch 6, wobei der Kranz an einem Ende des Nabenelements (153) nach Einfügen der Nabe (153) durch die Öffnung (181) in der Tragplatte (180) und dem Tragbock (170) durch Ausschrägen des Endes des Nabenelements (153) gebildet wird.

8. Bildschirmtragevorrichtung nach einem vorhergehenden Anspruch, eine Einrichtung (160) zum Beschränken des Drehwinkels der Tragplatte (180) relativ zu dem Tragbock (170) umfassend.

9. Bildschirmtragevorrichtung nach Anspruch 8, wobei die Einrichtung (160) einen gekrümmten Führungsschlitz (163) entweder in der Tragplatte (180) oder in dem Bock (170) koaxial zu den Öffnungen (171, 181) bzw. einen entsprechenden Vorsprung (161) entweder in dem Tragbock (170) oder in der Platte (180) umfasst, wobei der Führungsschlitz (163) und der Vorsprung (161) zusammenwirken, um den Winkel zu beschränken, in dem sich die Tragplatte (180) relativ zu dem Tragbock (170) drehen kann.

10. Bildschirmtragevorrichtung nach Anspruch 9, wobei die Tragplatte (180) einen Bereich (183) aufweist, der aus der Ebene der Tragplatte (180) herausgewölbt ist und sich in Richtung des Tragbocks (170) erstreckt, wobei die Öffnung (181) und der Führungsschlitz (163) in dem gewölbten Bereich (183) ausgebildet sind.

11. Bifdschirmtragevorrichtung nach Anspruch 10, wobei sich der gewölbte Bereich (183) in der Mitte der Tragplatte (180) befindet.

12. Bildschirmtragevorrichtung nach einem der Ansprüche 2 bis 10, wenn von Anspruch 2 abhängig, wobei das Nabenelement (153) ein Loch (155) aufweist, das sich durch die Mitte davon erstreckt, um einem Kabel zu ermöglichen, dort hindurch zu laufen, um mit einem an der Tragplatte (180) angebrachten Bildschirm verbunden zu werden.

13. Bildschirmtragevorrichtung nach einem vorhergehenden Anspruch, wobei die Verbindung mit der Basis (130) Drehung des Tragarms (10) um eine erste Achse herum relativ zu der Basis (130) ermöglicht, wobei der Tragbock (170) schwenkbar mit dem Ende des Tragarms (10) verbunden ist, um sich um eine zu der ersten Achse parallele zweite Achse herum zu drehen.

14. Bildschirmtragevorrichtung nach Anspruch 13, wobei der Tragbock (180) wenigstens ein Schraubenloch (185) dort hindurch umfasst, um das Befestigen eines Bildschirms (120) an dem Tragbock (180) zu ermöglichen.

15. Bildschirmtragevorrichtung nach Anspruch 14, wobei die Schraubenlöcher (185) nach Normen der Video Electronic Standard Association (VESA) positioniert sind.

16. Bildschirmtragevorrichtung nach einem der Ansprüche 13 bis 15, wobei der Tragbock (180) mit wenigstens einem ersten Haken (187) ausgebildet ist, der sich von einer Kante davon erstreckt, um in eine entsprechende Öffnung (127) an einer Rückseite eines Bildschirms (120) aufgenommen zu werden.

17. Bildschirmtragevorrichtung nach einem der Ansprüche 13 bis 16, einen Basisbock (140) umfassend, der an der Basis (130) angebracht werden kann, um das Montieren der Basis (130) an einer geneigten Ebene zu ermöglichen, wobei der Basisbock (140) mit wenigstens einem Haken (141) ausgestattet ist, der mit wenigstens einem entsprechenden Schlitz (137), der in der Basis (130) ausgebildet ist, in Eingriff gebracht werden kann.

18. Bildschirmtragevorrichtung nach Anspruch 17, wobei der Basisbock (140) mit wenigstens einem Sicherungsloch (143) ausgestattet ist, um das Befestigen des Basisbocks (140) an einer geneigten Ebene zu ermöglichen.

19. Bildschirmtragevorrichtung nach Anspruch 17 oder Anspruch 18, wobei der Basisbock (140) mit wenigstens einem Verbindungsloch (145) ausgestattet ist, um das Verbinden des Basisbocks (140) mit der Basis (130) zu ermöglichen, und die Basis (130) mit wenigstens einem Verbindungsloch (138), das dem Verbindungsloch (145) des Basisbocks (140) entspricht, ausgestattet ist.

20. Bildschirmtragevorrichtung nach Anspruch 19, wobei das Verbindungsloch (145) des Basisbocks (140) und das Verbindungsloch (138) der Basis (130) nach Normen der Video Electronic Standard Association (VESA) positioniert sind.

21. Bitdschirmtragevorrichtung nach einem der Ansprüche 93 bis 20, des Weiteren ein Basisdrehgelenk umfassend, das das andere Ende (10a) des Tragarms (10) schwenkbar an der Basis (130) anbringt, wobei das Basisctrehgelenk ein Paar eines ersten und zweiten Tragbocks (23, 27), die mit einem vorgegebenen Abstand voneinander beabstandet sind und an der Basis (130) befestigt sind, und ein erstes und zweites Basisdrehgelenkteil (30, 40) zum drehbaren Kombinieren gegenüberliegender Seiten des anderen Endes (10a) des Tragarms (10) mit dem ersten bzw. zweiten Tragbock (23, 27) umfasst.

22. Bildschirmtragevorrichtung nach Anspruch 21, wobei das erste Basisdrehgelenkteil (30) ein erstes Stiftunterbringteil (31), das an einer ersten Seite des anderen Endes (10a) des Tragarms (10) ausgebildet ist, ein erstes Stifttrageteil (32), das in dem ersten Tragbock (23) ausgebildet ist, einen ersten Drehgefenkstift (33), bei dem ein erstes Ende drehbar in das erste Stiftunterbringteil (31) eingefügt ist und ein zweites Ende in das erste Stifttrageteil (32) eingepasst ist, und eine erste Reibfeder (34), die zwischen dem ersten Stiftunterbringteil (31) und dem ersten Drehgelenkstift (33) angeordnet ist und eine der Drehung des ersten Drehgelenkstifts (33) widerstehende Kraft aufweist, umfasst.

23. Bildschirmtragevorrichtung nach Anspruch 21 oder 22, wobei der erste Tragbock (23) ein Federtrageteil (24) umfasst, das nach innen vorsteht und mit einer Drehfeder (35) daran ausgestattet ist, die eine Elastizität aufweist, um in eine entgegengesetzte Richtung zu einer Abwärtsdrehung des Tragarms (10) gegen die Basis (130) zu wirken.

24. Bildschirmtragevorrichtung nach einem der Ansprüche 21 bis 23, wobei das zweite Basisdrehgelenkteil (40) ein zweites Stiftunterbringteil (41), das an einer zweiten Seite des anderen Endes (10a) des Tragarms (10) ausgebildet ist, ein zweites Stifttrageteil (42), das in dem zweiten Tragbock (27) ausgebildet ist, einen zweiten Drehgelenkstift (43), bei dem ein erstes Ende drehbar in das zweite Stiftunterbringteil (41) eingefügt ist und ein zweites Ende in das zweite Stifttrageteil (42) eingepasst ist, und ein erstes Verbindungstrageteil (45), das fest in den zweiten Tragbock (27) eingepasst ist und mit dem zweiten Ende des zweiten Drehgelenkstifts (43) integriert ist, umfasst.

25. Bildschirmtragevorrichtung nach einem der Ansprüche 21 bis 24, wobei wenigstens eines des ersten und zweiten Drehgelenkteils (30, 40) mit einem Drehwinkelbeschränkungsteil (50) ausgestattet ist, um einen Drehwinkel des Tragarms (10) gegen die Basis (130) in einem vorgegebenen Bereich zu beschränken.

26. Bildschirmtragevorrichtung nach Anspruch 25, wobei das Drehbeschränkungsteil (50) ein Paar fächerförmige Nuten (51), die an der zweiten Seite des anderen Endes (10a) des Tragarms (10) um das zweite Stiftunterbringteil (41) herum einander gegenüberliegend ausgebildet sind, und ein Paar Anschläge (53), die um das zweite Stifttrageteil (42) des zweiten Tragbocks (27) herum bereitgestellt sind und nach einer Drehrichtung des Tragarms (10) selektiv mit dem Paar fächerförmiger Nuten (51) in Eingriff kommen, umfasst.

27. Bildschirmtragevorrichtung nach einem der Ansprüche 24 bis 26, des Weiteren ein Hauptdrehgelenk umfassend, das das Ende (10b) des Tragarms (10) schwenkbar an dem Tragbock (170) anbringt, wobei das Hauptdrehgelenk ein Paar eines dritten und vierten Tragbocks (73, 77), die mit einem vorgegebenen Abstand voneinander beabstandet sind und an dem Tragbock (170) befestigt sind, umfasst, wobei das Hauptdrehgelenk ein erstes und zweites Hauptdrehgelenkteit (80, 90) zum drehbaren Kombinieren gegenüberliegender Seiten des Endes (10b) des Tragarms (10) mit dem dritten bzw. vierten Tragbock (73, 77) umfasst.

28. Bildschirmtragevorrichtung nach Anspruch 27, wobei das erste Hauptdrehgelenkteil (80) ein drittes Stifttrageteil (82), das an einer ersten Seite des Endes (10b) des Tragarms (10) ausgebildet ist, einen dritten Drehgelenkstift (83), bei dem ein erstes Ende in den dritten Stifttrageteil (82) gepasst ist, und eine zweite Reibfeder (84), die mit dem dritten Tragbock (73) integriert ist, um ein zweites Ende des dritten Drehgeienkstifts (83) darin unterzubringen, und eine der Drehung des dritten Drehgelenksfifts (83) widerstehende Kraft aufweist, umfasst.

29. Bildschirmtragevorrichtung nach Anspruch 28, wobei das zweite Hauptdrehgelenkteil (90) ein drittes Stiftunterbringteil (91), das an einer zweiten Seite des Endes (10b) des Tragarms (10) ausgebildet ist, ein zweites Verbindungstrageteil (95), das zwischen den gegenüberliegenden Seiten des Endes (10b) des Tragarms (10) bereitgestellt ist, einen vierten Drehgelenkstift (93), bei dem ein erstes Ende mit dem zweiten Verbindungstrageteil (95) integriert ist und drehbar in den dritten Stiftunterbringteit (91) eingefügt ist, und eine dritte Reibfeder (94), die mit dem vierten Tragbock (77) integriert ist, um ein zweites Ende des vierten Drehgelenkstifts (93) darin unterzubringen, und eine der Drehung des vierten Drehgelenkstifts (93) widerstehende Kraft aufweist, umfasst.

30. Bildschirmtragevorrichtung nach einem der Ansprüche 27 bis 29, wobei das zweite Hauptdrehgelenkteil (90) ein Kippwinkelbeschränkungsteil (55) umfasst, um einen Kippwinkel eines Bitdschirmhauptkörpers (120) gegen den Tragarm (10) in einem vorgegebenen Bereich zu beschränken.

31. Bildschirmtragevorrichtung nach Anspruch 30, wobei das Kippwinkelbeschränkungsteil (55) ein Bogenschnittteil (56), das an dem vierten Tragbock (77) angrenzend an die dritte Reibfeder (94) ausgebildet ist, und eine Kippbeschränkungszwischenscheibe (57), die mit einem Zwischenscheibendurchgangsloch (58) ausgebildet ist und fest auf den vierten Drehgetenkstift (93) gepasst ist, und einen Vorsprung (59), der nach einer Kipprichtung eines Bildschirmhauptkörpers (120) selektiv mit gegenüberliegenden Enden des Bogenschnittteils (56) in Eingriff gebracht wird, umfasst, wobei der Kippwinkel eines Bitdschirnnhauptkörpers (120) gegen den Tragarm (10) in einem vorgegebenen Bereich beschränkt ist.

32. Bildschirmtragevorrichtung nach einem der Ansprüche 29 bis 31, wobei ein Schwenkverbindungsmechanismus (45, 95, 100, 110) des Bildschirmtragarms ein Paar Hilfsverbindungselemente (100, 110) umfasst, die drehbar mit dem ersten und zweiten Verbindungstragteil (45, 95) kombiniert sind.

33. Bildschirmtragevorrichtung nach Anspruch 32, wobei das erste und zweite Verbindungstragteil (45, 95) mit einer Vielzahl von Stiftlöchern (47, 97), die mit einem vorgegebenen Abstand voneinander beabstandet sind, ausgestattet sind, und an gegenüberliegenden Enden der Hilfsverbindungselemente (100, 110) Durchgangslöcher (100a, 110a), die mit den Stiftlöchern (47, 97) auszurichten sind, bereitgestellt sind.

34. Bildschirmtragevorrichtung nach Anspruch 33, des Weiteren eine Vielzahl von Verbindungskupplungsstiften (102) umfassend, die durch die Stiftlöcher (47, 97) des ersten und zweiten Verbindungstragteils (45, 95) und die Stiftdurchgangslöcher (100a, 110a) der Hilfsverbindungselemente (100, 110) Durchgangslöcher (100a, 110a) eingefügt werden, um die Hilfsverbindungselemente (100,110) mit dem ersten und zweiten Verbindungstragteil (45, 95) zu koppeln.

35. Bildschirmtragevorrichtung nach einem der Ansprüche 13 bis 34, des Weiteren ein Tragarmunterbringteil (135) umfassend, das an einer Mitte der Basis (130) bereitgestellt ist, um den Tragarm (10) unterzubringen.

36. Bildschirmtragevorrichtung nach Anspruch 22, wobei die erste Reibfeder (34) ein erstes Ende, das an den ersten Drehgelenkstift (33) gepasst ist, und ein zweites Ende, das mit dem ersten Stiftunterbringteil (31) kombiniert ist, umfasst.

37. Bildschirmtragevorrichtung nach Anspruch 36, wobei die erste Reibfeder (34) an dem Tragarm (10) befestigt ist und drehbar mit dem ersten Drehgelenkstift (33), der mit einer vorgegebenen Reibung an dem ersten Tragbock (23) befestigt ist, kombiniert ist.

38. Bildschirmtragevorrichtung nach Anspruch 37, wobei die vorgegebene Reibung stärker ist als ein Drehmoment auf Grund eines Gewichts eines Bildschirmhauptkörpers (120).

39. Bildschirmtragevorrichtung nach Anspruch 23, wobei die Drehfeder (35) ein erstes Ende, das von dem ersten Tragbock (23) getragen wird, und ein zweites Ende, das von dem Tragarm (10) getragen wird, umfasst, wobei eine Kraft veranlasst wird, in eine entgegengesetzte Richtung zu einer Vorwärtsdrehung eines mit dem Tragarm (10) verbundenen Bildschirmhauptkörpers (120) zu wirken.

40. Bildschirmtragevorrichtung nach Anspruch 23 oder Anspruch 39, wobei die Elastizität der Drehfeder (35) einem Drehmoment auf Grund eines Gewichts eines Bildschirmhauptkörpers (120) entspricht, wobei ermöglicht wird, dass das Gewicht und die Elastizität einander ausgleichen und den Tragarm (10) mit einer geringen Kraft gegen die Basis (130) drehen.

41. Bildschirmtragevorrichtung nach Anspruch 32, wobei das erste und zweite Verbindungstragteil (45, 95) durch die Hilfsverbindungselemente (100, 110) so verbunden sind, dass das zweite Verbindungstragteil (95) zusammen mit den Hilfsverbindungselementen (100,110) gedreht wird.

42. Bildschirmtragevorrichtung nach Anspruch 32 oder Anspruch 41, wobei dann, wenn ein Bildschinnhauptkörper (120) in Aufwärts- und Abwärtsrichtungen gegen den Tragarm (10) gekippt werden kann, die zweite und dritte Reibfeder (84, 94) um den dritten und vierten Drehgelenkstift (83, 93) herum gedreht werden, wobei das Drehen der Hilfsverbindungselemente (100, 110) und des zweiten Verbindungstragteils (95) verhindert wird.

43. Bildschirmtragevorrichtung nach Anspruch 42, wobei eine Reibung zwischen dem dritten Drehgelenkstift (83) und der zweiten Reibfeder (84) und eine Reibung zwischen dem vierten Drehgelenkstift (93) und der dritten Reibfeder (94) stärker sind als ein Drehmoment auf Grund eines Gewichts eines Bildschirmhauptkörpers (120).

44. Bildschirmtragevorrichtung nach Anspruch 31, wobei ein Bereich des Kippwinkels durch eine Konstruktion des Bogenschnittteils (56) und des Vorsprungs (59) der Kippbeschränkungszwischenscheibe (57) bestimmt wird.

45. Bildschirmtragevorrichtung nach Anspruch 32, wobei die Hilfsverbindungselemente (100, 110) eine Drehbewegung des Tragarms (10) gegen die Basis (130) in eine Kippbewegung eines Bildschirmhauptkörpers (120) übertragen.

46. Bildschirmtragevorrichtung nach einem der Ansprüche 13 bis 45, wobei ein Bildschirmhaupikörper (120) in eine Rückwärtsrichtung gegen den Tragarm (10) gekippt werden kann, um parallel zu dem Tragarm (10) zu liegen.

47. Bildschirmtragevorrichtung nach Anspruch 29, wobei eine Drehbewegung des zweiten Verbindungstragteils (95) zu dem vierten Drehgelenkstift (93) übertragen wird und der vierte Tragbock (77) zusammen mit dem vierten Drehgelenkstift (93) gedreht wird, wobei ein Bildschirmhauptkörper (120) gekippt wird.

48. Bildschirmtragevorrichtung nach einem der Ansprüche 13 bis 47, wobei ein Kippen eines Bildschirmhauptkörpers (120) gegen den Tragarm (10) so mit einer Drehung des Tragarms (10) gegen die Basis (130) verblockt wird, dass ein Bildschirmhauptkörper (120) in der Höhe gesteuert wird, während eine Kippposition beibehalten wird.

49. Bildschirmtragevorrichtung nach Anspruch 17, des Weiteren einen Armständer (190) umfassend, der mit einem Bildschirmtrageteil (191) mit wenigstens einem nach VESA-Normen positionierten Verbindungsloch (193) ausgestattet ist.

50. Bildschirmtragevorrichtung nach Anspruch 49, wobei das Verbindungsloch (138) der Basis (130) mit dem Verbindungsloch (193) des Bitdschirmtragteils (191) ausgerichtet ist, um die Basis (130) so an dem Büdschirmtragteil (191) zu befestigen, dass ein Bildschirm an dem Armständer (190) montiert werden kann.

51. Bildschirmtragevorrichtung nach einem vorhergehenden Anspruch, einen Schwenkverbindungsmechanismus (45, 95, 100, 110) umfassend, der sich zwischen der Basis (130) und dem Tragbock (170) erstreckt und betätigt werden kann, um den Tragbock (170) zu veranlassen, sich relativ zu dem Tragarm (10) zu drehen, wenn sich der Tragarm (10) relativ zu der Basis (130) dreht.

## Revendications

1. Support d'écran comprenant un bras de support (10), une patte de support (170) reliée à une extrémité du bras de support (10) et une plaque de support (180) pour fixer un écran, la patte de support (170) et la plaque de support (180) comprenant des moyens d'accouplement (151,153) pour monter un écran sur le bras de support (10), les moyens d'accouplement (151,153) étant fonctionnels pour permettre la rotation de la plaque de support (180) par rapport à la patte de support (170), **caractérisé en ce que** l'autre extrémité (10a) du bras de support (10) est reliée de manière pivotante à une base (130).

2. Support d'écran selon la revendication 1, dans lequel les moyens d'accouplement (151, 153) comprennent un élément de moyeu (153) s'étendant entre la plaque de support (180) et la patte de support (170), la plaque de support (180) et / ou la patte de support (170) étant montés de manière rotative sur l'élément de moyeu (153).

3. Support d'écran selon la revendication 2, dans lequel la patte de support (170) et la plaque de support (180) présentent chacune une ouverture correspondante (171, 181) pour recevoir l'élément de moyeu (153).

4. Support d'écran selon la revendication 3, dans lequel une rondelle (151) au moins est disposée sur le moyeu (153) entre la patte de support (170) et la plaque de support (180).

5. Support d'écran selon l'une quelconque des revendications 2 à 4, dans lequel l'élément de moyeu (153) présente une collerette qui fait saillie de manière radiale au niveau de chaque extrémité.

6. Support d'écran selon la revendication 5, dans lequel une rondelle (151) au moins est disposée sur l'élément de moyen (153) entre une collerette et la patte de support (170) et / ou la plaque de support (180) de telle sorte que la plaque de support (180) et la patte de support (170) soient maintenues ensemble avec une force de friction prédéterminée qui doit être surmontée pour faire tourner la plaque de support (180) par rapport à la patte de support (170).

7. Support d'écran selon la revendication 6, dans lequel la collerette au niveau d'une extrémité de l'élément de moyeu (153) est formée après l'insertion du moyeu (153) à travers l'ouverture (181) dans la plaque de support (180) et la patte de support (170) en évasant ladite extrémité de l'élément de moyeu (153).

8. Support d'écran selon l'une quelconque des revendications précédentes, comprenant des moyens (160) pour limiter l'angle de rotation de la plaque de support (180) par rapport à la patte de support (170).

9. Support d'écran selon la revendication 8, dans lequel lesdits moyens (160) comprennent une fente de guidage curviligne (163) dans la plaque de support (180) ou la patte (170), coaxiale avec lesdites ouvertures (171, 181) et une saillie correspondante (161) dans la patte de support (170) ou la plaque (180), respectivement, la fente de guidage (163) et la saillie (161) coopérant pour limiter l'angle dont la plaque de support (180) peut tourner par rapport à la patte de support (170).

10. Support d'écran selon la revendication 9, dans lequel la plaque de support (180) présente une région (183) déviée du plan de la plaque de support (180) et s'étendant vers la patte de support (170), l'ouverture (181) et la fente de guidage (163) étant formées dans la région déviée (183).

11. Support d'écran selon la revendication 10, dans lequel la région déviée (183) est située au centre de la plaque de support (180).

12. Support d'écran selon l'une quelconque des revendications 2 à 10, lorsqu'il y a dépendance vis-à-vis de la revendication 2, dans lequel l'élément de moyeu (153) présente un trou (155) qui s'étend à travers le centre de celui-ci pour permettre à un câble de passer à travers pour être relié à un écran fixé à la plaque de support (180).

13. Support d'écran selon l'une quelconque des revendications précédentes, dans lequel le raccordement à la base (130) permet la rotation du bras de support (10) autour d'un premier axe par rapport à la base (130), la patte de support (170) étant reliée de manière pivotante à ladite extrémité du bras de support (10) pour tourner autour d'un deuxième axe parallèle au premier axe.

14. Support d'écran selon la revendication 13, dans lequel la patte de support (180) comprend au moins un trou de vis (185) à travers pour permettre de fixer un écran (120) à la patte de support (180).

15. Support d'écran selon la revendication 14, dans lequel les trous de vis (185) sont positionnés selon les normes Video Electronic Standard Association (VESA).

16. Support d'écran selon l'une quelconque des revendications 13 à 15, dans lequel la patte de support (180) est formée avec au moins un premier crochet (187) qui s'étend à partir d'un bord de celle-ci pour être reçu dans une ouverture correspondante (127) à l'arrière d'un écran (120).

17. Support d'écran selon l'une quelconque des revendications 13 à 16, comprenant de plus une patte de base (140) pouvant être attachée à la base (130) pour permettre à la base (130) d'être montée sur un plan incliné, dans lequel la patte de base (140) est fournie avec au moins un crochet (141) qui peut être mis en prise avec au moins une fente correspondante (137) formée dans la base (130).

18. Écran selon la revendication 17, dans lequel la patte de base (140) est équipée avec au moins un trou de fixation (143) pour permettre à la patte de base (140) d'être fixée sur un plan incliné.

19. Support d'écran selon la revendication 17 ou la revendication 18, dans lequel la patte de base (140) est fournie avec au moins un trou de raccordement (145) pour permettre de relier la patte de base (140) à la base (130) et la base (130) est fournie avec au moins un trou de raccordement (138) correspondant au trou de raccordement (145) de la patte de base (140).

20. Support d'écran selon la revendication 19, dans lequel le trou de raccordement (145) de la patte de base (140) et le trou de raccordement (138) de la base (130) sont positionnés selon les normes VESA (Vidéo Electronic Standard Association).

21. Support d'écran selon l'une quelconque des revendications 13 à 20 comprenant de plus une charnière de base qui monte de manière pivotante ladite autre extrémité (10a) du bras de support (10) sur la base (130), la charnière de base comprenant une paire de première et de deuxième pattes de support (23, 27) espacées l'une de l'autre d'une distance prédéterminée et attachées sur la base (130) et des première et deuxième parties de charnière de base (30, 40) pour combiner en rotation les côtés opposés de ladite autre extrémité (10a) du bras de support (10) et les première et deuxième pattes de support (23, 27), respectivement.

22. Support d'écran selon la revendication 21, dans lequel la première partie de charnière de base (30) comprend une première partie de réception de broche (31) formée sur un premier côté de l'autre extrémité (10a) du bras de support (10), une première partie de support de broche (32) formée à l'intérieur de la première patte de support (23), une première broche de charnière (33) ayant une première extrémité insérée en rotation dans la première partie de réception de broche (31) et une deuxième extrémité ajustée dans la première partie de support de broche (32) et un premier ressort de friction (34) interpose entre la première partie de réception de broche de charnière (31) et la première broche dé charnière (33) et qui présente une force de résistance à l'encontre de la rotation de la première broche de charnière (33).

23. Support d'écran selon la revendication 21 ou 22, dans lequel la première patte de support (23) comprend une partie de support de ressort (24) pour faire saillie vers l'intérieur et sur laquelle est fourni un ressort de torsion (35) qui présente une élasticité de façon à agir dans une direction opposée à une rotation vers le bas du bras de support (10) contre la base (130).

24. Support d'écran selon l'une quelconque des revendications 21 à 23, dans lequel la deuxième partie de charnière de base (40) comprend une deuxième partie de réception de broche (41) formée sur un deuxième côte de l'autre extrémité (10a) du bras de support (10), une deuxième partie de support de broche (42) formée à l'intérieur de la deuxième patte de support (27), une deuxième broche de charnière (43) ayant une première extrémité insérée en rotation dans la deuxième partie de réception de broche (41) et une deuxième extrémité ajustée dans la deuxième partie de support de broche (42) et une première partie de support de liaison (45) ajustée de manière fixe dans la deuxième patte de support (27) et incorporée avec la deuxième extrémité de la deuxième broche de charnière (43).

25. Support d'écran selon l'une quelconque des revendications 21 à 24, dans lequel au moins l'une de la première et de la deuxième parties de charnière de base (30, 40) est fournie avec une partie de limitation (50) de l'angle de rotation pour limiter l'angle de rotation du bras de support (10) par rapport à la base (130) dans une plage prédéterminée.

26. Support d'écran selon la revendication 25, dans lequel la partie de limitation de l'angle de rotation (50) comprend une paire de rainures en forme d'hélice (51) formées sur le deuxième côté de l'autre extrémité (10a) du bras de support (10), autour de la deuxième partie de réception de broche (41), opposées l'une par rapport à l'autre, et une paire de butées (53) fournies autour de la deuxième partie de support de broche (42) de la deuxième patte de support (27) et, mises en prise de manière sélective avec la paire de rainures en forme d'hélice (51) selon la direction de rotation du bras de support (10).

27. Support d'écran selon l'une quelconque des revendications 24 à 26 comprenant de plus une charnière principale qui monte de manière pivotante ladite extrémité (10b) du bras de support (10) sur la patte de support (170), la charnière principale comprenant une paire de troisième et quatrième pattes de support (73, 77) espacées l'une de l'autre d'une distance prédéterminée et attachées sur la patte de support (170), dans lequel la charnière principale comprend des première et deuxièmes parties de charnière principale (80, 90) pour combiner en rotation les côtés opposés de ladite extrémité (10b) du bras de support (10) aux troisième et quatrième pattes de support (73, 77), respectivement.

28. Support d'écran selon la revendication 27, dans lequel la première partie de charnière principale (80) comprend une troisième partie de support de broche (82) formée sur un premier côte de ladite extrémité (10b) du bras de support (10), une troisième broche de charnière (83) ayant une première extrémité ajustée dans la troisième partie de support de broche (82) et un deuxième ressort de friction (84) incorporé avec la troisième patte de support (73) et pour recevoir en rotation une deuxième extrémité de la troisième broche de charnière (83) à l'intérieur, et qui présente une force de résistance à l'encontre de la rotation dé la troisième broche de charnière (83).

29. Support d'écran selon la revendication 28, dans lequel la deuxième partie de charnière principale (90) comprend une troisième partie de réception de broche (91) formée sur le deuxième côté de ladite extrémité (10b) du bras de support (10), une deuxième partie de support de liaison (95) étant fournie entre les côtés opposés de ladite extrémité (10b) du bras de support (10), une quatrième broche de charnière (93) ayant une première extrémité incorporée avec la deuxième partie de support de liaison (95) et insérée en rotation dans la troisième partie de réception de broche (91), et un troisième ressort de friction (94) incorporé avec la quatrième patte de support (77) et pour recevoir en rotation une deuxième extrémité de la quatrième broche de charnière (93) à l'intérieur, et qui présente une force de résistance à l'encontre de la rotation de la quatrième broche de charnière (93).

30. Support d'écran selon l'une quelconque des revendications 27 à 29, dans lequel la deuxième partie de charnière principale (90) comprend une partie de limitation de l'angle d'inclinaison (55) pour limiter l'angle d'inclinaison d'un corps principal d'écran (120) contre le bras de support (10) à l'intérieur d'une plage prédéterminée.

31. Support d'écran selon la revendication 30, dans lequel la partie de limitation de l'angle d'inclinaison (55) comprend une partie d'arc coupé (56) formée sur la quatrième patte de support (77) adjacente au troisième ressort de friction (94) et une rondelle de limitation de l'inclinaison (57) formée avec un trou à travers la rondelle (58) et ajustée de manière fixe sur la quatrième broche de charnière (93) et une saillie (59) mise en prise de manière sélective avec des extrémités opposées de la partie d'arc coupé (56) selon une direction d'inclinaison d'un corps principal d'écran (120), dans lequel l'angle d'inclinaison du corps principal d'écran (120) contre le bras de support (10) est limité à l'intérieur d'une plage prédéterminée.

32. Support d'écran selon l'une quelconque des revendications 29 à 31, dans lequel un mécanisme de tringleries oscillantes (45, 95, 100, 110) du bras de support d'écran comprend une paire d'éléments de liaison auxiliaires (100, 110) qui sont combinés en rotation à des première et deuxième parties de support de liaison (45, 95).

33. Support d'écran selon la revendication 32, dans lequel les première et deuxième parties de support de liaison (45,95) sont fournies avec une pluralité de trous de broche (47, 97) espacés les uns des autres d'une distance prédéterminée et des trous traversants (100a, 110a) à aligner avec les trous de broche (47, 97) sont fournis sur les extrémités opposées des éléments de liaison auxiliaires (100, 110).

34. Support d'écran selon la revendication 33 comprenant de plus une pluralité de broches d'accouplement de liaison (102) insérées dans les trous de broche (47, 97) des première et deuxième parties de support de liaison (45, 95) et les trous traversants de broche (100a, 110a) des éléments de liaison auxiliaires (100, 110) pour coupler les éléments de liaison auxiliaires (100, 110) avec les première et deuxième parties de support de liaison (45, 95).

35. Support d'écran selon l'une quelconque des revendications 13 à 34 comprenant de plus une partie de réception de bras de support (135) fournie au niveau du centre de la base (130) pour recevoir le bras de support (10).

36. Support d'écran selon la revendication 22, dans lequel le premier ressort de friction (34) comprend une première extrémité ajustée à la première broche de charnière (33) et une deuxième extrémité combinée à la première partie de réception de broche (31).

37. Bras de support d'écran selon la revendication 36, dans lequel le premier ressort de friction (34) est attaché au bras de support (10) et combiné en rotation à la première broche de charnière (33) qui est attachée à la première patte de support (23) avec une friction prédéterminée.

38. Support d'écran selon la revendication 37, dans lequel la friction prédéterminée est plus forte qu'un couple dû au poids du corps principal d'un écran (120).

39. Support d'écran selon la revendication 23, dans lequel le ressort de torsion (35) comprend une première extrémité supportée par la première patte de support (23) et une deuxième extrémité supportée par le bras de support (10) en provoquant l'action d'une force dans une direction opposée à une rotation vers l'avant du corps principal d'un écran (120) relié au bras de support (10).

40. Support d'écran selon la revendication 23 ou la revendication 39, dans lequel l'élasticité du ressort de torsion (35) est égale à un couple dû au poids du corps principal d'un écran (120) en permettant au poids et à l'élasticité de se compenser et de faire tourner le bras de support (10) contre la base (130) avec une force faible.

41. Support d'écran selon la revendication 32, dans lequel les première et deuxième parties de support de liaison (45, 95) sont reliées par les éléments de liaison auxiliaires (100, 110) de telle sorte que la deuxième partie de liaison de support (95) soit tournée avec les éléments de liaison auxiliaires (100, 110).

42. Support d'écran selon la revendication 32 ou la revendication 41, dans lequel quand un corps principal d'écran (120) peut être incliné contre le bras de support (10) dans des directions vers le haut et vers le bas, les deuxième et troisième ressorts de friction (84, 94) sont tournés autour des troisième et quatrièmes broche de charnière (83, 93) en empêchant de tourner les éléments de liaison auxiliaires (100, 110) et la deuxième partie de support de liaison (95).

43. Support d'écran selon la revendication 42, dans lequel une friction entre la troisième broche de charnière (83) et le deuxième ressort de friction (84) et une friction entre la quatrième broche de charnière (93) et le troisième ressort de friction (94), sont plus fortes que le couple dû au poids du corps principal d'un écran (120).

44. Support d'écran selon la revendication 31, dans lequel une plage d'angle d'inclinaison est déterminée par la conception de la partie d'arc coupé (56) et la saillie (59) de la rondelle de limitation de l'inclinaison (57).

45. Support d'écran selon la revendication 32, dans lequel l'élément de liaison auxiliaire (100, 110) transmet un mouvement de rotation du bras de support (10) contre la base (130) à un mouvement d'inclinaison du corps principal d'un écran (120).

46. Support d'écran selon l'une quelconque des revendications 13 à 45, dans lequel un corps principal d'écran (120) peut être incliné dans une direction vers l'arrière contre le bras de support (10) pour se mettre parallèle au bras de support (10).

47. Support d'écran selon la revendication 29, dans lequel un mouvement de rotation de la deuxième partie de support de liaison (95) est transmis à la quatrième broche de charnière (93) et la quatrième patte de support (77) est tournée avec la quatrième broche de charnière (93) en inclinant de ce fait le corps principal d'un écran (120).

48. Support d'écran selon l'une quelconque des revendications 13 à 47, dans lequel une inclinaison du corps principal d'un écran (120) contre le bras de support (10) est verrouillée avec une rotation du bras de support (10) contre la base (130) de telle sorte que la hauteur du corps principal d'un écran (120) soit contrôlée tout en maintenant une position d'inclinaison.

49. Support d'écran selon la revendication 17, comprenant de plus un support de bras (190) fourni avec une partie de support d'écran (191) ayant au moins un trou de raccordement (193) positionné selon les normes VESA.

50. Support d'écran selon la revendication 49, dans lequel le trou de raccordement (138) de la base (130) est aligné avec le trou de raccordement (193) de la partie de support d'écran (191) pour attacher la base (130) à la partie de support d'écran (191) de telle sorte qu'un écran puisse être monté sur le support de bras (190).

51. Support d'écran selon l'une quelconque des revendications précédentes, comprenant un mécanisme de tringleries oscillantes (45, 95, 100, 110) s'étendant entre la base (130) et la patte de support (170) fonctionnelle pour faire tourner la patte de support (170) par rapport au bras de support (10) lorsque le bras de support (10) tourne par rapport à la base (130).
